# EUROPÄISCHE PATENTSCHRIFT

(11) **EP 1 479 655 B1**
(45) Veröffentlichungstag und Bekanntmachung des Hinweises auf die Patenterteilung: **01.08.2007**
(21) Anmeldenummer: 04450107.0
(22) Anmeldetag: 12.05.2004
(51) Int. Cl.: C02F 7/00, C02F 3/06, C02F 3/26

(54) **Anlage zur Aufbereitung des Wassers von stehenden Gewässern**
Facility for treating stagnant bodies of water
Installation de traitement d'eaux stagnantes

(30) Priorität: 22.05.2003 AT 7962003
(43) Veröffentlichungstag der Anmeldung: 24.11.2004
(73) Patentinhaber: Minnova Mineralien-Handelsgesellschaft m.b.H., 8501 Lieboch (AT)
(72) Erfinder: Wesner, Wolfgang, Dipl.-Ing. Mag., 1050 Wien (AT); Klement, Arnold, 1050 Wien (AT)
(74) Vertreter: Gibler, Ferdinand

(56) Entgegenhaltungen:
- WO-A-01/51738
- CN-A- 1 245 151
- DE-A1- 10 127 412
- US-A- 5 549 828

## Beschreibung

Die Erfindung betrifft eine Anlage zur Aufbereitung des Wassers von stehenden Gewässern, wie z.B. Schwimmbiotopen, Gartenteichen, mit einem aeroben Biofilter, mit einer Vorrichtung zur Sauerstoffanreicherung des Wassers.

Stehende Gewässer wie Schwimmbiotope, Gartenteiche und dgl. sind einem kontinuierlichem Eintrag von organischem Material ausgesetzt. Dieser Eintrag entsteht sowohl durch die aktive Nutzung (schwimmen, baden, Haustiere etc.) als auch durch passive Verdriftung von biologischem Material (Blätter, Pflanzenteile, Insekten, Erde, Staub etc.).

Im Speziellen bei Gewässern mit Wasseroberflächen kleiner als 300m², aber auch bei intensiv genutzten Gewässern (Badeteiche), reicht die natürliche Selbstreinigungskapazität des Gewässers nicht aus, um einen vollständigen Abbau des eingetragenen organischen Materials (TOC) sicher zu stellen. In der Folge kommt es zur Anreicherung von organischem Material im Gewässer.

Steigen im Sommer die Temperaturen, so erhöht sich die mikrobiologische Aktivität im Gewässer und die kumulierte organische Substanz wird unter massiver Sauerstoffzehrung abgebaut (organische Substanz + Sauerstoff → Kohlendioxid + Wasser).

Da bei höheren Wassertemperaturen zusätzlich noch eine verminderte Löslichkeit von Sauerstoff gegeben ist, kann weniger Sauerstoff nachgeliefert werden als verbraucht wird. Sauerstoffmangel tritt auf.

Sauerstoffmangel äußert sich durch das Auftreten anaerober bakterieller Abbauprozesse (Fäulnis), deren Endprodukte geruchsintensiv (z.B. Schwefelwasserstoff - Geruch nach faulen Eiern) und daher im höchsten Maße unerwünscht sind.

Mit dem Abbau von organischer Substanz werden auch anorganische Nährstoffe freigesetzt. Dieser Vorgang wird als Mineralisierung bezeichnet. Produkte der Mineralisierung sind im Wesentlichen Ammonium, Nitrat, orto-Phosphat, Kalium, Magnesium und Spurenelemente.

Die mineralischen Nährstoffe können (im Gegensatzt zum organischen Material vor der Mineralisierung) direkt von Wasserpflanzen und Algen aufgenommen werden, wodurch deren Wachstum gefördert wird. Eine zusätzliche Förderung des Wachstums ergibt sich aus der Anreicherung des Kohlendioxides, welches in Folge der Abbauprozesse entsteht.

Die Förderung des Wachstums der Wasserpflanzen ist generell erwünscht, während das Wachstum der Algen durchwegs als unerwünscht und störend empfunden wird. Es gilt daher, ein System dahingehend zu optimieren, dass das Auftreten von Algenwachstum (Phytoplankton wie Fadenalgen) minimiert wird.

Um dem ökologischem Anspruch derartiger stehender Gewässer gerecht zu werden, verbietet sich der Einsatz von oxidativen Chemikalien wie Chlor, Wasserstoffperoxid, Mineralsäuren etc., wie das im Swimmingpool üblich ist.

Nach dem Stand der Technik ist der Einsatz von biologischen Filteranlagen zur Aufbereitung von Wasser in Kombination mit geeigneten Wasserumwälzsystemen (Skimmervorrichtung, Teichpumpe und Verteilereinrichtung) üblich. In derartigen Filtersystemen findet in einem ersten Schritt eine mechanische Partikelfiltration statt. Damit verbleibt der größte Teil der organischen Substanz im Filter, wo auch der Abbau stattfinden muss.

Durch unzureichenden Abbau in Folge der Sauerstoffversorgung in Teilen oder dem gesamten Filterkörper kommt es bei erhöhten Wassertemperaturen im Sommer zu anaeroben Abbauvorgängen mit unerwünschter Geruchsbildung, sowie zu unregelmäßiger, stoßförmiger Nährstofffreisetzung, welche das Algenwachstum fördert. Im Speziellen führen anaerobe Verhältnisse im Filter zur plötzlichen Reduktion von schwerlöslichen Eisen(III)-hyperoxiden zu löslichen Eisen(II)-Verbindungen, wodurch die Freisetzung von ortho-Phosphaten, welche während des aeroben Betriebs des Filters auf der Oberfläche der Eisenhydroxyde gebunden werden, erfolgt. Da Phosphor das limitierende Element für das Algenwachstum darstellt, kommt es in der Folge zu erhöhtem Algenwachstum.

Die DE 101 27 412 A1 beschreibt ein Verfahren zur Aufbereitung von Wasser mit einer biologischen Filterstufe, wobei dem Wasser vor Eintritt in die Filterstufe oder in der Filterstufe Sauerstoff zugeführt wird. Insbesondere wird Reinsauerstoff zugesetzt, welcher aus Peroxyd gewonnen wird, wobei vorzugsweise der gesamte Sauerstoff im biologischen Filter zugesetzt wird.

Aus der WO 01/51738 A ist eine Wasserzirkulationsvorrichtung für Zierteiche bekannt, wobei in einem Becken Schwimm- und Filterbereiche vorgesehen sind, und der Filter als biologischer Filter ausgebildet sein kann. Es ist ein Netz aus Rohren vorgesehen, welche Öffnungen aufweisen, zum Absaugen des Wassers, sowie ein Abfluss bzw- ein Überlauf zur Rückführung des Wassers, wobei durch den Abfluss bzw. Überlauf dem Wasser Sauerstoff zugeführt wird. Zum Ansaugen und Ausstoßen des Wassers sind zwei Pumpen vorgesehen, wobei auch das durch bzw. über den Abfluss bzw. Überlauf rückgeführte Wasser, mittels einer Pumpe ausgestoßen wird.

Aufgabe gegenständlicher Erfindung ist es, eine Anlage zur Aufbereitung des Wassers für stehende Gewässer mit biologischen Filtrationssystemen anzugeben, die einen gleichmäßigen, ausschließlich aeroben Abbau organischer Substanz zu jedem Zeitpunkt gewährleistet und die Anreicherung von organischem Material oder Nährstoffspitzen durch unkontrollierte Mineralisierung sowie Sauerstoffmangel verhindert und somit die Ausbildung von Algen minimiert.

Erfindungsgemäß wird dies dadurch erreicht, dass die Vorrichtung zur Sauerstoffanreicherung des Wassers zumindest zwei mit Gleichspannung beaufschlagbare Elektroden umfasst, die in vorgegebenem Abstand zueinander im Wasser angeordnet sind.

Dies erlaubt in vorteilhafter Weise, durch Elektrolyse des Wassers mit geringem technischen Aufwand und hohem Wirkungsgrad Sauerstoff genau dort zu erzeugen, wo er für die aerobe Bakterienflora benötigt wird. Damit wird erreicht, dass die aerobe Bakterienflora von biologischen Filtrationssystemen zu jeder Zeit mit ausreichend Sauerstoff versorgt wird, um das Wasser in stehenden Gewässern ausreichend aufzubereiten, d.h. so viele Nährstoffe zu binden, sowie deren Rücklösung aus dem Filter zu minimieren, dass Algenbildung zuverlässig vermieden wird. Dadurch wird weiters der durch eine biologische Filtration verursachte Sauerstoffverlust besonders wirkungsvoll und gezielt kompensiert.

In Weiterbildung der Erfindung kann vorgesehen sein, dass die Vorrichtung zur Sauerstoffanreicherung eine Wasserstrahlpumpe umfasst. Dadurch kann auf konstruktiv einfache Weise und mit hohem Wirkungsgrad dem Wasser Sauerstoff zugeführt werden.

In weiterer Ausgestaltung der Erfindung kann vorgesehen sein, dass der aerobe Biofilter als zwangsdurchströmter Filter ausgebildet ist. Durch eine Zwangsdurchströmung, insbesondere mit definierter Strömungsrichtung, kann das Auftreten von anaeroben Einschlüssen im Filter verhindert werden.

In weiterer Ausgestaltung der Erfindung kann vorgesehen sein, dass der aerobe Biofilter als Bodenfilter ausgebildet ist. Im Bodenbereich ist durch eine erhöhte Konzentration abgelagerter organischer Substanzen der Biofilter besonders wirkungsvoll, sodass konstante aerobe Bedingungen sicherer erzielt werden können.

Insbesondere kann vorgesehen sein, dass die Vorrichtung zur Sauerstoffanreicherung den Sauerstoff innerhalb des aeroben Biofilters dem Wasser zuführt. So kann Sauerstoff genau in jenem Bereich dem Wasser zugeführt werden, wo er durch die aeroben Prozesse am stärksten verbraucht wird.

Weiters kann vorgesehen sein, dass die Vorrichtung zur Sauerstoffanreicherung den Sauerstoff dem Wasser im Ablauf, insbesondere im unmittelbaren Ablauf, des aeroben Biofilters zuführt. Die Aufnahme von Sauerstoff im Wasser kann im unmittelbaren Ablaufbereich des aeroben Biofilters am besten erfolgen, weil dort die Konzentration von im Wasser gelöstem Sauerstoff am niedrigsten ist. Gleichzeitig kann dabei ein Austrag an Kohlendioxid im Gleichgewicht mit der Atmosphäre stattfinden. Kohlendioxid wirkt als Nährstoff für Algen und tritt im Ablauf des Biofilters als Endprodukt des biologischen Abbaues in erhöhter Konzentration auf.

In weiterer Ausgestaltung der Erfindung kann ein Regelkreis, bestehend aus einem Sensor zur Erfassung des momentanen Sauerstoffgehalts im Wasser, und einer Steuereinheit zur Steuerung der Sauerstoffanreicherung vorgesehen sein. Damit kann die Sauerstofferzeugung an die jeweils momentan gegebenen Verhältnisse angepasst werden und der benötigte Energieaufwand minimiert werden.

In Weiterführung der Erfindung kann vorgesehen sein, dass die Elektroden im wesentlichen parallel zueinander angeordnet sind. Dadurch kann sichergestellt werden, dass die Elektrolyse über die gesamte Länge des Drahtes in gleichem Maße stattfindet.

In diesem Zusammenhang kann in Weiterführung der Erfindung vorgesehen werden, dass die Elektroden innerhalb des aeroben Biofilters angeordnet sind. Der Vorteil besteht in einer bedarfsgerechten Produktion von Sauerstoff für die aerobe Bakterienflora.

In einer anderen Variante der Erfindung kann vorgesehen sein, dass die Elektroden im Ablauf, insbesondere im unmittelbaren Ablauf, des aeroben Biofilters des aeroben Biofilters angeordnet sind. Die Aufnahme von Sauerstoff im Wasser kann im unmittelbaren Ablaufbereich des aeroben Biofilters am besten erfolgen, weil dort die Konzentration von im Wasser gelöstem Sauerstoff am niedrigsten ist.

In Weiterführung der Erfindung kann vorgesehen werden, dass die Elektroden in einem Textilgewebe, vorzugsweise einem Kunststoffgewebe, in vorgegebenem Abstand zueinander integriert sind. Das Gewebe ist hierbei aus einem elektrisch isolierendem Material, wohl aber wasser- und gasdurchlässig ausgeführt. Damit kann auf technisch leicht realisierbare Art sichergestellt werden, dass ohne weitere technische Einrichtungen wie z.B. Abstandshalterungen der für den Betrieb der Elektrolyse notwendige Abstand der Elektroden eingehalten wird.

In Weiterführung der Erfindung kann vorgesehen werden, dass die Elektroden durch Metalldrähte gebildet sind. Hierbei ist darauf zu achten, dass die Auswahl der verwendeten Metalle für eine elektrolytische Erzeugung von Sauerstoff aus Wasser geeignet ist. Der Vorteil bei der Verwendung von Metalldrähten liegt in der leichten Integrierbarkeit in Kunststoff- oder Textilgewebe sowie in der Formbarkeit, womit die jeweils gegebenen geometrischen Verhältnisse eines stehenden Gewässers leicht berücksichtigt werden können.

In Weiterführung der Erfindung kann vorgesehen werden, dass die als Anode betriebene Elektrode Titan, Edelmetall oder leitfähiges Metalloxid enthält und/oder die als Kathode betriebene Elektrode aus Edelstahl gebildet ist. Derartige Materialien weisen eine hohe Korrosionsbeständigkeit unter Wasser auf, was eine lange Lebensdauer der erfindungsgemäßen Anlage sicherstellt.

Gemäß einer anderen Ausführungsform kann vorgesehen sein, dass die Vorrichtung zur Sauerstoffanreicherung eine Einrichtung zur Zuführung von Luftsauerstoff, mit Sauerstoff angereicherter Luft oder Reinsauerstoff in das Wasser umfasst. Der Vorteil dieser Ausführungsform besteht darin, dass Sauerstoff so mit besonders geringem Energieaufwand in das Wasser eingebracht werden kann.

Die Erfindung wird unter Bezugnahme auf die beigeschlossenen Zeichnungen, in welchen besonders bevorzugte Ausführungsbeispiele dargestellt sind, näher beschrieben. Dabei zeigt:
Fig.1 einen schematischen Vertikalschnitt eines Schwimmbiotopes;
Fig.2 eine schematische Darstellung einer Vorrichtung zur Sauerstoffanreicherung auf elektrolytischer Basis und
Fig.3 einen schematischen Vertikalschnitt einer Vorrichtung zur Sauerstoffanreicherung mittels Luftsauerstoff mit einer Wasserstrahlpumpe.

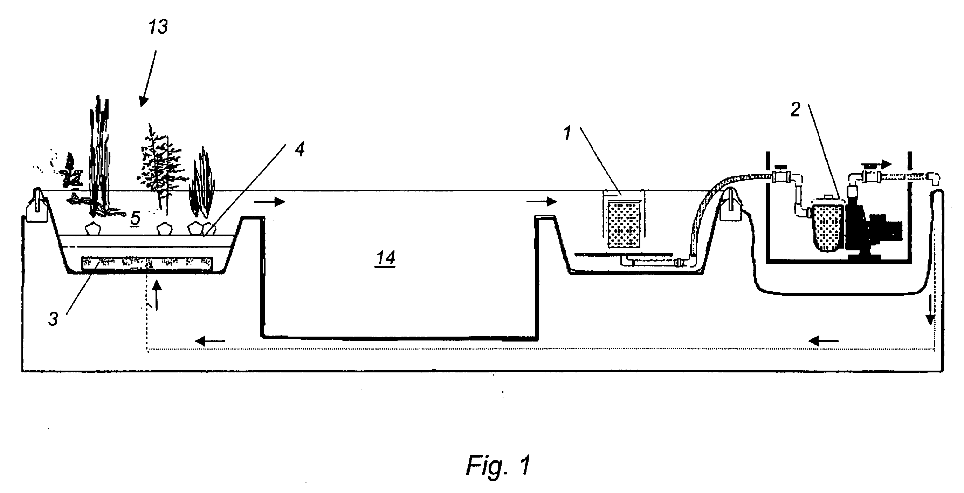

Fig. 1 zeigt als typisches Beispiel für ein stehendes Gewässer mit biologischen Filtrationssystem ein Schwimmbiotop, das mit einer wasserdichten Folie 11 gegen das umliegende Erdreich abgegrenzt ist. Der Filtrationsprozess wird durch eine Wasserumwälzung in Gang gehalten. Im folgenden wird Fig. 1 diesem Wasserkreislauf folgend beschrieben.

Über eine Skimmervorrichtung 1 wird Oberflächenwasser von einer Teichpumpe 2 angesaugt und über eine Rohrleitung oder einen Schlauch in Pfeilrichtung in eine Verteilereinrichtung 3 am Grund des Gewässers im Bereich einer Filterzone 13, z.B. ein zwangsdurchströmter aerober Bodenfilter, befördert. Die Verteilereinrichtung 3, beispielsweise ein mit vielen kleinen Löchern versehenes Schlauchsystem, lässt das Wasser nun von unten durch den aeroben Filter 4 dringen. Dieser kann im wesentlichen aus Kies, Sand, Zeolith oder anderen geeigneten körnigen Substraten aufgebaut sein, auf denen sich die aerobe Bakterienflora zur biologischen Aufbereitung des Wassers bildet. Nach der biologischen Aufbereitung des Wassers gerät dieses wieder in Oberflächennähe, von dort in den Schwimmbereich 14 und wird erneut von der Skimmervorrichtung 1 erfasst.

Das Schwimmbiotop enthält eine Vorrichtung zur Sauerstoffanreicherung im Wasser. Diese kann grundsätzlich beliebig ausgeführt sein.

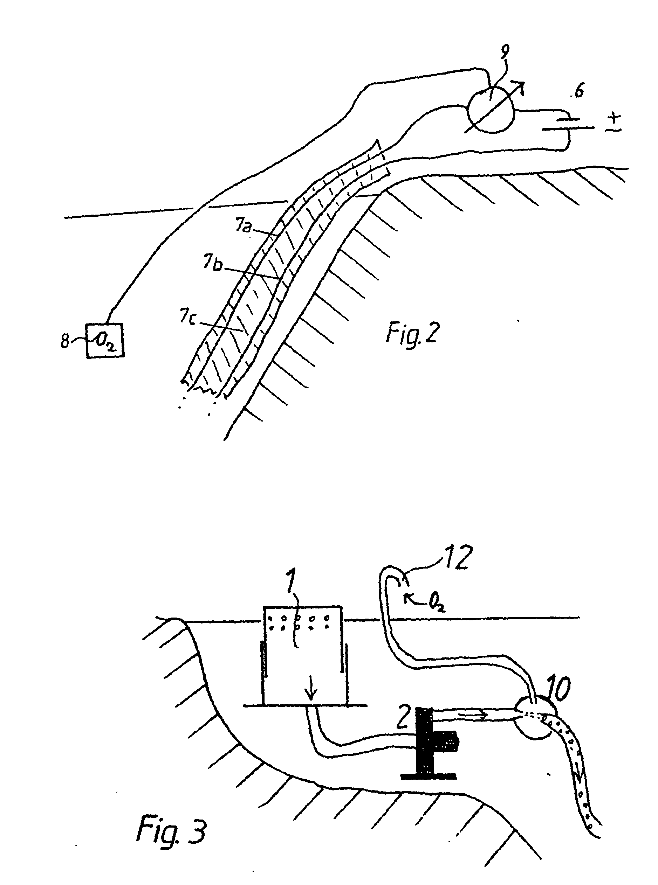

Gemäß der in Fig. 2 dargestellten bevorzugten Ausführung ist eine Vorrichtung zur elektrolytischen Sauerstofferzeugung vorgesehen. Diese besteht aus einer Gleichspannungsquelle (Trafo plus Gleichrichter) 6 und aus zwei Elektroden 7a und 7b, wobei die Elektroden (7a,b) in der bevorzugten Ausführungsform der Erfindung im wesentlichen parallel zueinander angeordnet sind. Diese können auch in einem Kunststoff- oder Textilgewebe 7c zueinander in gleichmäßigem und definiertem Abstand integriert sein. Sauerstoff O₂ wird elektrolytisch aus Wasser durch die Anodenreaktion 2H₂O→O₂ + 4H⁺ + 4e⁻ freigesetzt. Die sauerstofferzeugende Einrichtung kann nun derart positioniert sein, dass sie in unterschiedlichen Bereichen in Relation zum aeroben Biofilter Sauerstoff in das Wasser abgibt. In Strömungsrichtung gesehen kann der Sauerstoff vor, innerhalb oder nach dem aeroben Biofilter ins Wasser abgegeben werden. Auch mehrere dieser Bereiche können für die Sauerstoffanreicherung vorgesehen sein.

Es kann ein Regelkreis vorgesehen sein (siehe Fig. 2), der aus einem Sensor 8 zur Erfassung des momentanen Sauerstoffgehalts im Wasser, sowie einem Steuerelement 9 zur Steuerung der Sauerstoffanreicherung besteht. Die Art der Steuerung ist nicht erfindungswesentlich. Der Regelkreis bewirkt, dass Sauerstoff jeweils nur in dem Ausmaß produziert wird, wie er zur Herstellung jenes Sauerstoffgehalts im Wasser benötigt wird, der eine erhöhte Algenbildung vermeidet. Eine überschüssige und somit unnotwendige Sauerstoffproduktion bzw. Luftsauerstoffzuführung kann somit vermieden werden.

Als besondere Ausführungsform wird für die Anode 7a ein spezialbeschichteter Titandraht und für die Kathode 7b ein Edelstahldraht, als geometrischer Parallelabstand zwischen diesen 1 cm, und als angelegte Gleichspannung 10V gewählt.

Als weitere besondere Ausführungsform wird Sauerstoff nicht elektrolytisch erzeugt, sondern in Form von Luft gemeinsam mit dem Umwälzwasser durch die Verteileinrichtung 3 befördert (siehe Fig. 3). Die benötigte Luft kann beispielsweise durch eine Wasserstrahlpumpe 10 im Wasserkreislauf unmittelbar nach der Teichpumpe 2 dem Wasserkreislauf zugeführt werden, wobei ein entsprechender Luftschlauch 12 beispielsweise an der Skimmervorrichtung 1 befestigt ist und über die Wasseroberfläche hinausragt. Der Luftsauerstoff wird hierbei über diesen Luftschlauch 12 und den Sog der Wasserstrahlpumpe 10 in den Wasserkreislauf aufgenommen. Statt Luftsauerstoff kann aber auch mit Sauerstoff angereicherte Luft oder auch Reinsauerstoff 2 dem Wasserkreislauf zugeführt werden.

## Patentansprüche

1. Anlage zur Aufbereitung des Wassers von stehenden Gewässern, wie z.B. Schwimmbiotopen, Gartenteichen, mit einem aeroben Biofilter (4), mit einer Vorrichtung zur Sauerstoffanreicherung des Wassers, **dadurch gekennzeichnet, dass** die Vorrichtung zur Sauerstoffanreicherung des Wassers zumindest zwei mit Gleichspannung beaufschlagbare Elektroden (7a,b) umFasst, die in vorgegebenem Abstand zueinander im Wasser angeordnet sind.

2. Anlage nach Anspruch 1, **dadurch gekennzeichnet, dass** die Vorrichtung zur Sauerstoffanreicherung eine Wasserstrahlpumpe (10) umfasst.

3. Anlage nach Anspruch 1 oder 2, **dadurch gekennzeichnet, dass** der aerobe Biofilter (4) als zwangsdurchströmter Filter ausgebildet ist.

4. Anlage nach Anspruch 1, 2 oder 3, **dadurch gekennzeichnet, dass** der aerobe Biofilter (4) als Bodenfilter ausgebildet ist

5. Anlage nach einem der Ansprüche 1 bis 4, **dadurch gekennzeichnet, dass** die Vorrichtung zur Sauerstoffanreicherung den Sauerstoff innerhalb des aeroben Biofilters (4) dem Wasser zuführt.

6. Anlage nach einem der Ansprüche 1 bis 5, **dadurch gekennzeichnet, dass** die Vorrichtung zur Sauerstoffanreicherung den Sauerstoff dem Wasser im Ablauf, insbesondere im unmittelbaren Ablauf (5), des aeroben Biofilters zuführt.

7. Anlage nach einem der Ansprüche 1 bis 6, **dadurch gekennzeichnet, dass** ein Regelkreis, bestehend aus einem Sensor (8) zur Erfassung des momentanen Sauerstoffgehalts im Wasser, und einer Steuereinheit (9) zur Steuerung der Sauerstoffanreicherung integriert ist.

8. Anlage nach einem der Ansprüche 1 bis 7, **dadurch gekennzeichnet, dass** die Elektroden (7a,b) im wesentlichen parallel zueinander angeordnet sind.

9. Anlage nach einem der Ansprüche 1 bis 8, **dadurch gekennzeichnet, dass** die Elektroden (7a,b) innerhalb des aeroben Biofilters (4) angeordnet sind.

10. Anlage nach einem der Ansprüche 1 bis 9, **dadurch gekennzeichnet, dass** die Elektroden (7a,b) im Ablauf, insbesondere im unmittelbaren Ablauf (5), des aeroben Biofilters des aeroben Biofilters (4) angeordnet sind.

11. Anlage nach einem der Ansprüche 1 bis 10, **dadurch gekennzeichnet, dass** die Elektroden (7a,b) in einem Textilgewebe (7c), vorzugsweise einem Kunststoffgewebe, in vorgegebenem Abstand zueinander integriert sind.

12. Anlage nach einem der Ansprüche 1 bis 11, **dadurch gekennzeichnet, dass** die Elektroden (7a,b) durch Metalldrähte gebildet sind.

13. Anlage nach einem der Ansprüche 1 bis 12, **dadurch gekennzeichnet, dass** die als Anode betriebene Elektrode (7a) Titan, Edelmetall oder leitfähiges Metalloxid enthält und/oder die als Kathode betriebene Elektrode (7b) aus Edelstahl gebildet ist.

14. Anlage nach einem der Ansprüche 1 bis 13, **dadurch gekennzeichnet, dass** die Vorrichtung zur Sauerstoffanreicherung eine Einrichtung zur Zuführung von Luftsauerstoff, mit Sauerstoff angereicherter Luft oder Reinsauerstoff (10, 12) in das Wasser umfasst.

## Claims

1. A facility for treating stagnant bodies of water such as swimming-biotopes or garden ponds for example, comprising an aerobic biofilter (4), an apparatus for oxygenating the water, **characterized in that** the apparatus for oxygenating the water comprises at least two electrodes (7a, b) which can be applied with direct voltage and which are arranged at a predetermined distance with respect to each other in the water.

2. A facility according to claim 1, **characterized in that** the apparatus for oxygenating comprises a water-jet pump (10).

3. A facility according to claim 1 or 2, **characterized in that** the aerobic biofilter (4) is arranged as a forced-flow filter.

4. A facility according to claim 1, 2 or 3, **characterized in that** the aerobic biofilter (4) is arranged as a soil filter.

5. A facility according to claim 1 to 4, **characterized in that** the apparatus for oxygenation supplies the oxygen to the water within the aerobic biofilter (4).

6. A facility according to one of the claims 1 to 5, **characterized in that** the apparatus for oxygenation supplies the oxygen to the water in the discharge of the aerobic biofilter, especially the direct discharge (5) thereof.

7. A facility according to one of the claims 1 to 6, **characterized in that** a control loop is integrated, consisting of a sensor (8) for detecting the momentary oxygen content in the water and a control unit (9) for controlling the oxygenation.

8. A facility according to one of the claims 1 to 7, **characterized in that** the electrodes (7a,b) are arranged substantially parallel with respect to each other.

9. A facility according to one of the claims 1 to 8, **characterized in that** the electrodes (7a,b) arc arranged within the aerobic biofilter (4).

10. A facility according to one of the claims 1 to 9, **characterized in that** the electrodes (7a,b) are arranged in the discharge of the aerobic biofilter (4), especially in the direct discharge (5) thereof.

11. A facility according to one of the claims 1 to 10, **characterized in that** the electrodes (7a,b) are integrated in a textile fabric (7c), preferably a plastic fabric, at a predetermined distance from each other.

12. A facility according to one of the claims 1 to 11, **characterized in that** the electrodes (7a,b) are formed by metal wires.

13. A facility according to one of the claims 1 to 12, **characterized in that** the electrode (7a) operated as anode contains titanium, precious metal or conductive metal oxide and/or the electrode (7b) operated as cathode is made of high-grade steel.

14. A facility according to one of the claims 1 to 13, **characterized in that** the apparatus for oxygenation comprises a device for supplying atmospheric oxygen, air enriched with oxygen or pure oxygen (10, 12) to the water.

## Revendications

1. Installation pour le traitement de l'eau de plans d'eau stagnants, par exemple de piscines naturelles, de bassins de jardin, avec un biofiltre aérobie (4), avec un dispositif d'oxygénation de l'eau, **caractérisée en ce que** le dispositif d'oxygénation de l'eau comprend au moins deux électrodes (7a,b) pouvant être alimentées en courant continu, qui sont disposées dans l'eau à une distance prédéterminée l'une de l'autre.

2. Installation selon la revendication 1, **caractérisée en ce que** le dispositif d'oxygénation comprend une pompe à jet d'eau (10).

3. Installation selon la revendication 1 ou 2, **caractérisée en ce que** le biofiltre aérobie (4) est conçu comme un filtre à circulation forcée.

4. Installation selon la revendication 1, 2 ou 3, **caractérisée en ce que** le biofiltre aérobie (4) est conçu comme un filtre de fond.

5. Installation selon l'une des revendications 1 à 4, **caractérisée en ce que** le dispositif d'oxygénation amène à l'eau l'oxygène contenu dans le biofiltre aérobie (4).

6. Installation selon l'une des revendications 1 à 5, **caractérisée en ce que** le dispositif d'oxygénation amène l'oxygène à l'eau à la sortie, en particulier à la sortie (5) immédiate, du biofiltre aérobie.

7. Installation selon l'une des revendications 1 à 6, **caractérisée en ce qu'**il est prévu un circuit de régulation, composé d'un capteur (8) destiné à détecter la teneur actuelle en oxygène de l'eau et d'une unité de commande (9) pour la commande de l'oxygénation.

8. Installation selon l'une des revendications 1 à 7, **caractérisée en ce que** les électrodes (7a,b) sont disposées de façon sensiblement parallèle l'une à l'autre.

9. Installation selon l'une des revendications 1 à 8, **caractérisée en ce que** les électrodes (7a,b) sont disposées à l'intérieur du biofiltre aérobie (4).

10. Installation selon l'une des revendications 1 à 9, **caractérisée en ce que** les électrodes (7a,b) sont disposées à la sortie, de préférence à la sortie (5) immédiate du biofiltre aérobie (4).

11. Installation selon l'une des revendications 1 à 10, **caractérisée en ce que** les électrodes (7a,b) sont intégrées dans une toile textile (7c), de préférence une toile en matière plastique, à une distance prédéterminée l'une de l'autre.

12. Installation selon l'une des revendications 1 à 11, **caractérisée en ce que** les électrodes (7a,b) sont formées par des fils métalliques.

13. Installation selon l'une des revendications 1 à 12, **caractérisée en ce que** l'électrode (7a) servant d'anode contient du titane, un métal noble ou un oxyde métallique conducteur et/ou l'électrode (7b) servant de cathode est faite d'acier inoxydable.

14. Installation selon l'une des revendications 1 à 13, **caractérisée en ce que** le dispositif d'oxygénation comprend un dispositif pour amener de l'oxygène de l'air, de l'air enrichi en oxygène ou de l'oxygène pur (10, 12) dans l'eau.
